# EUROPEAN PATENT APPLICATION

(11) **EP 2 650 943 A1**
(43) Date of publication of application: **16.10.2013**
(21) Application number: 13161617.9
(22) Date of filing: 28.03.2013
(51) Int. Cl.: H01M 2/02

(54) **Rechargeable battery**

(30) Priority: 12.04.2012 KR 20120038031
(71) Applicant: Samsung SDI Co., Ltd., Yongin-si, Gyeonggi-do (KR); ROBERT BOSCH GMBH, 70442 Stuttgart (DE)
(72) Inventor: Lee, Chi-Young, Yongin-si, Gyeonggi-do (KR); Kim, Joong-Heon, Yongin-si, Gyeonggi-do (KR); Moon, Jong-Seok, Yongin-si, Gyeonggi-do (KR); Haam, Jeong-Wan, Yongin-si, Gyeonggi-do (KR); Lee, Hui-Jun, Yongin-si, Gyeonggi-do (KR)
(74) Representative: Gulde Hengelhaupt Ziebig & Schneider

(57) **Abstract**

A rechargeable battery (101) includes an electrode assembly (10) including a positive electrode (11) and a negative electrode (12), a case (30) having a space accommodating the electrode assembly (10) and including a support (38, 62, 72, 82) at a corner (39, 63, 73, 83) inside the case (30), and a cap plate (25) coupled to an opening (32) of the case (30) and supported by the support (38, 62, 72, 82).

## Description

### BACKGROUND OF THE INVENTION

### (a) Field of the Invention

The described technology relates generally to a rechargeable battery and, more particularly, to a rechargeable battery having an improved case structure.

### (b) Description of the Related Art

Unlike a primary battery, which is not designed to be rechargeable, a rechargeable battery can be recharged and discharged. A small-capacity rechargeable battery can be used for small portable electronic devices such as mobile phones, notebook computers, camcorders, and the like, while a large-capacity rechargeable battery can be used as a motor-driving power source for a hybrid vehicle, and the like.

Recently, a high-output rechargeable battery using a non-aqueous electrolyte of high energy density has been developed, and a plurality of high-output rechargeable batteries are connected in series or in parallel to constitute a high-output large-capacity battery module.

Also, a single large-capacity rechargeable battery generally includes a plurality of rechargeable batteries connected in series, and such rechargeable batteries may have a cylindrical shape, an angular shape, or the like.

In general, a rechargeable battery includes a case and a cover plate welded to the case. In order to weld the cover plate to the case, the cover plate may be supported on the opening. Here, when the case is formed to be thin in order to form a structure for supporting the cover plate, cracks may be generated on a thin portion of the case when impact is applied thereto.

When cracks are formed on the case, there is a risk of a fire due to a leaked electrolyte. In particular, when a traffic accident occurs in a state in which a battery module is loaded in an electric vehicle, there is a high possibility that cracks will be formed. Here, the leakage of an electrolyte through cracks would potentially lead to a secondary ignition or explosion.

The above information disclosed in this Background section is only for enhancement of understanding of the background of the described technology and therefore it may contain information that does not form the prior art that is already known in this country to a person of ordinary skill in the art.

### SUMMARY OF THE INVENTION

The presently described technology has been made in an effort to provide a rechargeable battery having features of enhancing stability.

An exemplary embodiment provides a rechargeable battery including: an electrode assembly including a positive electrode and a negative electrode; a case having a space accommodating the electrode assembly and including at least one support at a corner inside the case; and a cap plate coupled to an opening of the case and supported by the support.

The support may protrude from the corner of the case. For example, the support may protrude inwardly from the corner of the case. An upper end of the support may be positioned to be spaced apart from the opening of the case and may be in contact with a lower surface of the cap plate.

The support may extend along a height direction of the corner. The case may have two front surfaces facing each other and two lateral surfaces connecting lateral ends of the front surfaces, non-step portions may be at inner sides of the front surfaces and the lateral surfaces and a step portion may be at each corner positioned between the non-step portions.

The step portions may have a thickness greater than that of the non-step portions. The corner may have an arc shape and a curvature of the inner surface of the support facing the interior of the case may be greater than that of the outer surface of the corner.

The corner may have an arc shape and the inner surface of the support facing the interior of the case may be planar. The corner may be formed to have an oblique angle at which a front surface and a lateral surface of the case meet and the inner surface of the support may have an arc shape. The corner may have an oblique angle at which a front surface and a lateral surface of the case meet, and the inner surface of the support may have a trigonal prism shape. There may be a support at each corner of the case.

According to an embodiment, since the thickness of the corner portion is formed to be greater than the periphery, deformation of the rechargeable battery in the occurrence of impact can be reduced.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a rechargeable battery according to a first embodiment of the present invention.
FIG. 2 is a cross-sectional view taken along the line II-II in FIG. 1.
FIG. 3 is a partial cut-away perspective view of a case according to the first embodiment of the present invention.
FIG. 4 is a cross-sectional view taken along the line IV-IV in FIG. 3.
FIG. 5 is a cross-sectional view of a case of a rechargeable battery according to a second embodiment of the present invention.
FIG. 6 is a cross-sectional view of a case of a rechargeable battery according to a third embodiment of the present invention.
FIG. 7 is a cross-sectional view of a case of a rechargeable battery according to a fourth embodiment of the present invention.

### DETAILED DESCRIPTION OF THE EMBODIMENTS

The present invention will be described more fully hereinafter with reference to the accompanying drawings, in which exemplary embodiments of the invention are shown and described, by way of illustration. As those skilled in the art would realize, the described embodiments may be modified in various different ways, all without departing from the scope of the present invention, and, therefore, the invention should not be construed as being limited to the embodiments set forth herein. Like reference numerals designate like elements throughout the specification.

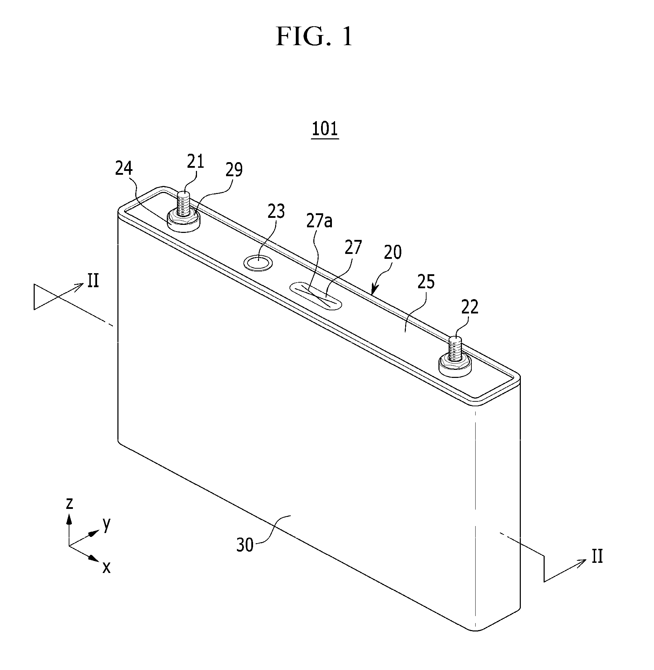

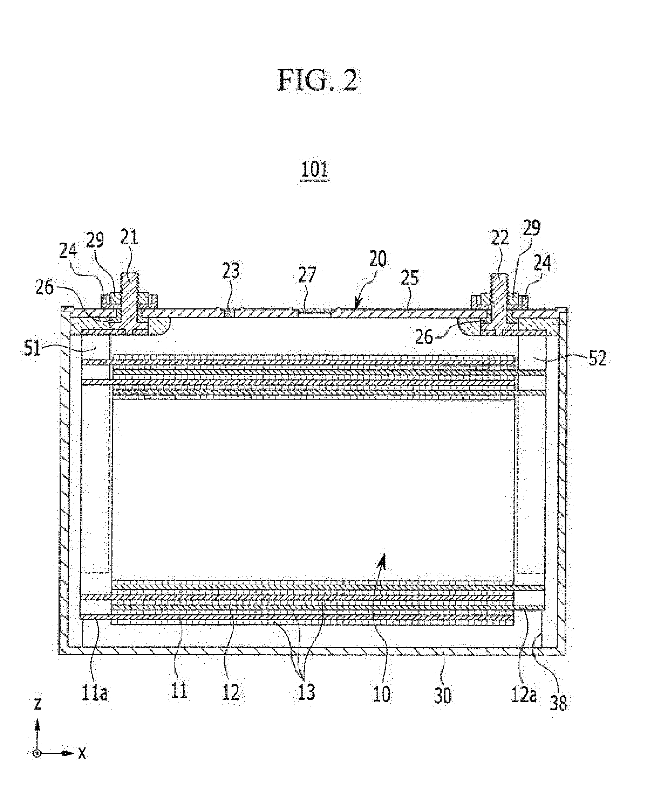

FIG. 1 is a perspective view of a rechargeable battery according to a first embodiment of the present invention, and FIG. 2 is a cross-sectional view taken along line II-II in FIG. 1.

With reference to FIGS. 1 and 2, a rechargeable battery 101 according to the first embodiment of the present invention includes an electrode assembly 10 formed by winding a positive electrode (a first electrode) 11 and a negative electrode (a second electrode) 12 with a separator 13 interposed therebetween, a case 30 accommodating the electrode assembly 10 therein, and a cap plate 25 coupled to an opening of the case 30.

In the first embodiment, for example, the rechargeable battery 101 is a lithium ion rechargeable battery having a rectangular or prismatic shape. However, without being limited thereto, the present invention may be applicable to various types of batteries such as a lithium polymer battery, a cylindrical battery, and the like.

The positive electrode 11 and the negative electrode 12 include coated regions of a collector formed as a thin metal foil on which an active material is coated and uncoated regions on which the active material is not coated.

The positive electrode uncoated region 11a may be formed at one lateral end of the positive electrode 11 in a lengthwise direction of the positive electrode 11, and the negative electrode uncoated region 12a may be formed at the other lateral end of the negative electrode 12 in a lengthwise direction of the negative electrode 12. The positive electrode 11 and the negative electrode 12 are wound with the separator 13 as an insulator interposed therebetween.

However, the present invention is not meant to be limited thereto, and the electrode assembly 10 may have a structure in which positive and negative electrodes are configured as a plurality of sheets that are alternately stacked with a separator interposed therebetween.

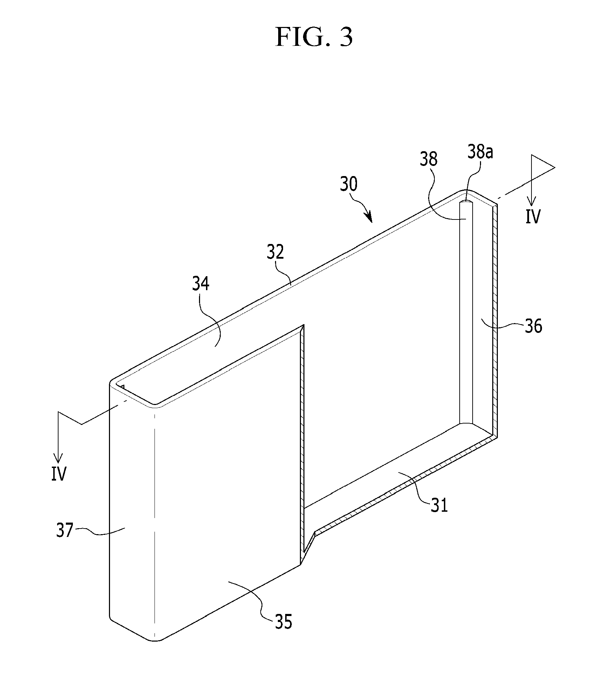

The case 30 has a shape of a substantially rectangular parallelepiped, and has an opening 32 at one side thereof, as shown in FIG. 3.

The cap assembly 20 includes a cap plate 25 covering the opening 32 of the case 30, a positive electrode terminal 21 outwardly protruding from the cap plate 25 and electrically connected with the positive electrode 11, a negative electrode terminal 22 outwardly protruding from the cap plate 25 and electrically connected with the negative electrode 12, and a vent member 27 with a notch 27a formed to be fractured according to a pre-set internal pressure.

The cap plate 25 is formed as a thin plate case and fixed to the opening 32 of the case through welding. An electrolyte injection hole is formed at one side of the cap plate 25 in order to inject an electrolyte, and a sealing stopper 23 for sealing the electrolyte injection hole is fixedly installed on the cap plate 25.

The positive electrode terminal 21 is installed in a penetrative manner on the cap plate 25. Between the cap plate 25 and the positive electrode terminal 21, a first gasket 24, positioned at an upper side, and an underlying second gasket 26 insulate the cap plate 25 and the positive electrode terminal 21.

The positive electrode terminal 21 has a cylindrical shape, and a nut 29 is installed on the positive electrode terminal 21 in order to support the positive electrode terminal 21 at an upper side, and thread is formed on an outer circumference of the positive electrode terminal 21 to allow the nut 29 to be fastened thereto.

The positive electrode terminal 21 is electrically connected with the positive electrode uncoated region 11a through a current collecting member 51, as a conductive medium, and a terminal flange supporting the positive electrode terminal 21 and the current collecting member 51 is formed at a lower end of the positive electrode terminal 21.

The negative electrode terminal 22 is installed in a penetrative manner on the cap plate 25. Between the cap plate 25 and the negative electrode terminal 22, the first gasket 24, positioned at an upper side, and the underlying second gasket 26 insulate the cap plate 25 and the positive electrode terminal 22.

The negative electrode terminal 22 has a cylindrical shape, and the nut 29 is installed on the negative electrode terminal 22 in order to support the negative electrode terminal 22 at an upper side, and thread is formed on an outer circumference of the positive electrode terminal 21 to allow the nut 29 to be fastened thereto.

Meanwhile, the negative electrode terminal 22 is electrically connected with the negative electrode uncoated region 12a through a current collecting member 52, as a conductive medium, and a terminal flange supporting the negative electrode terminal 22 and the current collecting member 52 is formed at a lower end of the negative electrode terminal 22.

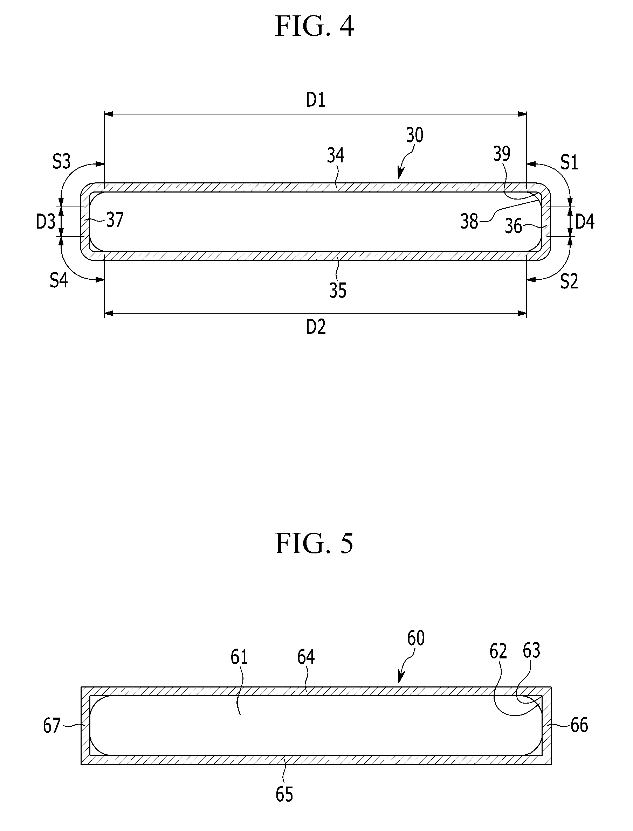

FIG. 3 is a partial cut-away perspective view of a case according to the first embodiment of the present invention, and FIG. 4 is a cross-sectional view taken along the line IV-IV in FIG. 3.

Referring to FIGS. 3 and 4, the case 30 has a bottom plate 31 and an outer peripheral surface continued to an upper portion thereof from the periphery of the bottom plate 31. The bottom plate 31 is configured as a plate having a substantially rectangular shape. The outer peripheral surface includes front surfaces 34 and 35 continued to the upper portion thereof from the wider sides of the bottom plate 31 opposed to (e.g., facing) each other and two lateral surfaces 36 and 37 continued to the upper portion thereof from narrower sides of the bottom plate 31 opposed to (e.g., facing) each other and connecting lateral ends of the front surfaces 34 and 35.

The front surfaces 34 and 35 are formed to be relatively large, and the two front surfaces 34 and 35 opposed to (e.g., facing) each other are positioned to be parallel. The lateral surfaces 36 and 37 are formed to be relatively narrow, and fixed to the front surfaces 34 and 35 to connect the front surfaces 34 and 35 opposed to (e.g., facing) each other. An opening 32 is formed at an upper end of the case 30 such that it is open upwardly.

A corner portion (e.g., corner) 39 in which the front surfaces 34 and 35 and the lateral surfaces 36 and 37 meet is curved to have an arc shape. The corner portion 39 is formed to be thicker than a neighboring flat portion, and a support portion (e.g., support) 38 is formed at the corner portion 39 such that it protrudes inwardly. The support portion 38 is integrally formed with the case 30 and is protruded to the interior of the case 30 from the corner portion 39.

The support portion 38 is formed at four corner portions, respectively, and an upper end of the support portion 38a is positioned to be downwardly spaced apart from the opening 32 so as to be in contact with the cap plate 25. The cap plate 25 is installed in the opening 32 by insertion. The cap plate 25, in a state of being supported by the support portion 38, is fixed to the case 30 (e.g., fixed through welding).

The support portion 38 is formed to be continued from the corner portion 39 in a height direction (e.g., the support portion 38 extends along a height direction of the corner portion 39), and a lower end thereof is formed to be in contact with the bottom plate 31. Due to the presence of the support portion 38, the corner portions 39 become step portions S1, S2, S3, and S4 having a step, and the front surfaces 34 and 35 and the lateral surfaces 36 and 37 positioned between the step portions S1, S2, S3, and S4 become non-step portions D1, D2, D3, and D4.

An inner surface of the support portion 38 (e.g., the surface of the support portion facing the interior of the case) has an arc shape, and the inner curvature of the support portion 38 is smaller than an outer curvature of the corner portion 39. Accordingly, the corner portion 39 is formed to have the greatest thickness at the center of the support portion 38 in a width direction, and the thickness thereof is gradually reduced toward edges of the support portion 38.

In the present invention, since the support portion 38 is formed, the thickness of the corner portion 39 is increased, so even if strong impact is applied from the outside, a possibility that the case 30 is deformed can be reduced.

Also, since the lower surface of the cap plate 25 and the upper end of the support portion 38 are in contact to support the cap plate 25, in a state in which the cap plate 25 is installed on the case 30, the cap plate 25 and the case 30 can be easily welded. Here, since the thickness of the case 30 is not reduced to support the cap plate 25, the strength of the case 30 can be enhanced.

FIG. 5 is a cross-sectional view of a case of a rechargeable battery according to a second embodiment of the present invention.

Referring to FIG. 5, a case 60 according to the present embodiment has a rectangular columnar shape, and has a bottom plate 61 and four wall surfaces. The bottom plate 61 is formed as a plate having a substantially rectangular shape. Front surfaces 64 and 65 are formed at wider sides of the bottom plate 61 opposed to (e.g., facing) each other and continued to upper portions thereof. Two lateral surfaces 66 and 67 are formed at narrower sides of the bottom plate 61 opposed to (e.g., facing) each other and continued to upper portions thereof to connect lateral ends of the front surfaces 64 and 65.

The front surfaces 64 and 65 are formed to be relatively wider, and the two front surfaces 64 an 65 opposed to (e.g., facing) each other are positioned to be parallel. The lateral surfaces 66 and 67 are formed to be relatively narrower and fixed to the front surfaces 64 and 65 to connect the front surfaces 64 and 65 opposed to (e.g., facing) each other.

The front surfaces 64 and 65 and the lateral surfaces 66 and 67 meet at an oblique angle, and a corner is formed at an outer side of a corner portion 63. The front surfaces 64 and 65 and the lateral surfaces 66 and 67 may formed to meet at a right angle.

The corner portion 63 is formed to be thicker than a neighboring flat portion, and a support portion 62 is formed at the corner portion 63 such that it protrudes inwardly. The support portion 62 is integrally formed with the case 60 and protrudes to the interior of the case 60 from the corner portion 63.

The support portion 62 is formed at four corner portions, respectively, and an upper end of the support portion 62 is positioned to be downwardly spaced apart from the opening of the case 60 so as to form a step. The support portion 62 is formed to be continued from the corner portion 63 in a height direction (e.g., the support portion 62 extends along a height direction of the corner portion 63), and a lower end thereof is formed to be in contact with the bottom plate 61. Due to the presence of the support portion 62, the corner portions 63 become step portions having a step, and the front surfaces 64 and 65 and the lateral surfaces 66 and 67 positioned between the step portions become non-step portions.

At the upper portion of the support portion 62, the cap plate 25 is positioned to be in contact with an upper end of the support portion 62, so the cap plate 25, in a state of being supported by the support portion 62, is fixed to the case 60 through welding.

The inner surface of the support portion 62 (e.g., the surface of the support portion facing the interior of the case) is formed as a curved surface having an arc shape. Accordingly, the corner portion 63 is formed to have the greatest thickness at the center of the support portion 62 in a width direction, and the thickness thereof is gradually reduced toward the edges of the support portion 62.

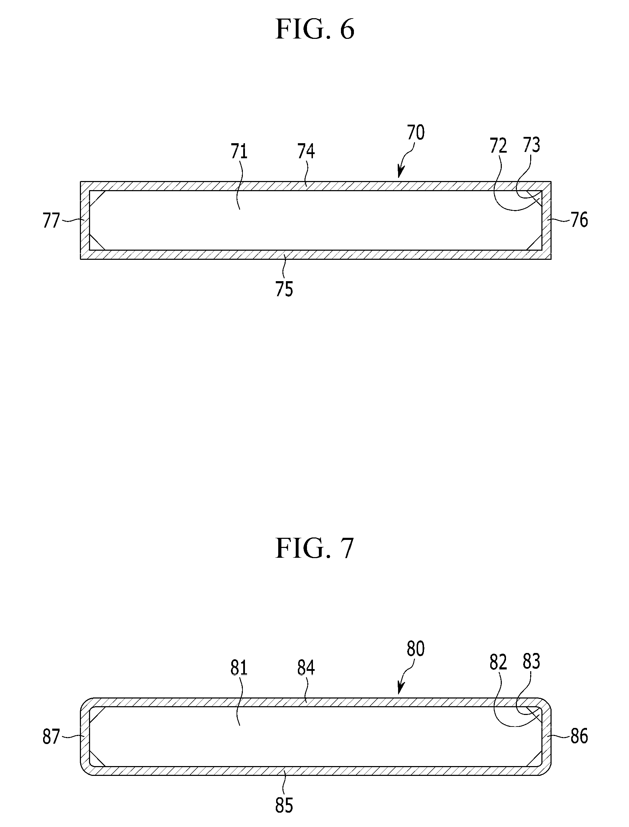

FIG. 6 is a cross-sectional view of a case of a rechargeable battery according to a third embodiment of the present invention.

Referring to FIG. 6, a case 70 according to the present embodiment has a rectangular columnar shape, and has a bottom plate 71 and four wall surfaces. The bottom plate 71 is formed as a plate having a substantially rectangular shape. Front surfaces 74 and 75 are formed at wider sides of the bottom plate 71 opposed to (e.g., facing) each other and continued to upper portions thereof. Two lateral surfaces 76 and 77 are formed at narrower sides of the bottom plate 71 opposed to (e.g., facing) each other and continued to upper portions thereof to connect lateral ends of the front surfaces 74 and 75.

The front surfaces 74 and 75 are formed to be relatively wider, and the two front surfaces 74 and 75 opposed to (e.g., facing) each other are positioned to be parallel. The lateral surfaces 76 and 77 are formed to be relatively narrower and fixed to the front surfaces 74 and 75 to connect the front surfaces 74 and 75 opposed to (e.g., facing) each other.

The front surfaces 74 and 75 and the lateral surfaces 76 and 77 meet at an oblique angle, and a corner is formed at an outer side of a corner portion 73. The front surfaces 74 and 75 and the lateral surfaces 76 and 77 may formed to meet at a right angle.

The corner portion 73 is formed to be thicker than a neighboring flat portion, and a support portion 72 is formed at the corner portion 73 such that it protrudes inwardly. The support portion 72 is integrally formed with the case 70 and protrudes to the interior of the case 70 from the corner portion 73.

The support portion 72 is formed at four corner portions, respectively, and an upper end of the support portion 72 is positioned to be downwardly spaced apart from the opening of the case 70 so as to form a step. The support portion 72 is formed to be continued from the corner portion 73 in a height direction (e.g., the support portion 72 extends along a height direction of the corner portion 73), and a lower end thereof is formed to be in contact with the bottom plate 71. Due to the presence of the support portion 72, the corner portions 73 become step portions having a step, and the front surfaces 74 and 75 and the lateral surfaces 76 and 77 positioned between the step portions become non-step portions.

At the upper portion of the support portion 72, the cap plate 25 is positioned to be in contact with an upper end of the support portion 72, so the cap plate 25, in a state of being supported by the support portion 72, is fixed to the case 70 through welding.

An inner surface of the support portion 72 (e.g., the surface of the support portion facing the interior of the case) is formed as a planar surface (e.g., a surface having a curvature of about 0), such that the support 72 has a substantially trigonal prism shape. Accordingly, the corner portion 73 is formed to have the greatest thickness at the center of the support portion 72 in a width direction, and the thickness thereof is gradually reduced toward the edges.

FIG. 7 is a cross-sectional view of a case of a rechargeable battery according to a fourth embodiment of the present invention.

Referring to FIG. 7, a case 80 according to the present embodiment has a rectangular columnar shape, and has a bottom plate 81 and four wall surfaces. The bottom plate 81 is formed as a plate having a substantially rectangular shape. Front surfaces 84 and 85 are formed at wider sides of the bottom plate 81 opposed to (e.g., facing) each other and continued to upper portions thereof. Two lateral surfaces 86 and 87 are formed at narrower sides of the bottom plate 81 opposed to (e.g., facing) each other and continued to upper portions thereof to connect lateral ends of the front surfaces 84 and 85.

The front surfaces 84 and 85 are formed to be relatively wider, and the two front surfaces 84 an 85 opposed to (e.g., facing) each other are positioned to be parallel. The lateral surfaces 86 and 87 are formed to be relatively narrower and fixed to the front surfaces 84 and 85 to connect the front surfaces 84 and 85 opposed to (e.g., facing) each other.

A corner portion 83 in which the front surfaces 84 and 85 and the lateral surfaces 86 and 87 meet is curved to have an arc shape. The corner portion 83 is formed to be thicker than a neighboring flat portion, and a support portion 82 is formed at the corner portion 83 such that it is protruded inwardly. The support portion 82 is integrally formed with the case 80 and protrudes to the interior of the case 80 from the corner portion 83.

The support portion 82 is formed at four corner portions, respectively, and an upper end of the support portion 82 is positioned to be downwardly spaced apart from the opening of the case 80 so as to form a step. The support portion 82 is formed to be continued from the corner portion 83 in a height direction (e.g., the support portion 82 extends along a height direction of the corner portion 83), and a lower end thereof is formed to be in contact with the bottom plate 81. Due to the presence of the support portion 82, the corner portions 83 become step portions having a step, and the front surfaces 84 and 85 and the lateral surfaces 86 and 87 positioned between the step portions become non-step portions.

At the upper portion of the support portion 82, the cap plate 25 is positioned to be in contact with an upper end of the support portion 82, so the cap plate 25, in a state of being supported by the support portion 82, is fixed to the case 80 through welding.

An inner surface of the support portion 82 (e.g., the surface of the support portion facing the interior of the case) is formed as a planar surface having a curvature close to 0 (e.g., a curvature of about 0). Accordingly, the corner portion 83 is formed to have the greatest thickness at the center of the support portion 82 in a width direction, and the thickness thereof is gradually reduced toward edges.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A rechargeable battery (101) comprising:
an electrode assembly (10) comprising a positive electrode (11) and a negative electrode (12);
a case (30) having a space accommodating the electrode assembly (10), and comprising at least one support (38, 62, 72, 82) at a corner (39, 63, 73, 83) inside the case (30); and
a cap plate (25) coupled to an opening (32) of the case (30) and supported by the support (38, 62, 72, 82).

2. The rechargeable battery of claim 1, wherein the support protrudes from the corner of the case.

3. The rechargeable battery of claim 2, wherein the support (38, 62, 72, 82) protrudes inwardly from the corner (39, 63, 73, 83) of the case (30).

4. The rechargeable battery of one of claims 1 to 3, wherein an upper end of the support (39, 63, 73, 83) is positioned to be spaced apart from the opening (32) of the case (30) and is in contact with a lower surface of the cap plate (25).

5. The rechargeable battery of one of claims 1 to 4, wherein the support (38, 62, 72, 82) extends along a height direction of the corner (39, 63, 73, 83).

6. The rechargeable battery of one of claims 1 to 5, wherein the case (30) has two front surfaces (34, 35) facing each other and two lateral surfaces (36, 37) connecting lateral ends of the front surfaces (34, 35), non-step portions (D1, D2, D3, D4) are at inner sides of the front surfaces and the lateral surfaces and a step portion (S1, S2, S3, S4) is at each corner positioned between the non-step portions (D1, D2, D3, D4).

7. The rechargeable battery of claim 6, wherein the step portions (S1, S2, S3, S4) have a thickness greater than that of the non-step portions (D1, D2, D3, D4).

8. The rechargeable battery of one of claims 1 to 7, wherein the corner (39) has an arc shape and a curvature of an inner surface of the support (38) facing the interior of the case (30) is greater than that of the outer surface of the corner (39).

9. The rechargeable battery of one of claims 1 to 5, wherein the corner (83) has an arc shape, and an inner surface of the support (82) facing the interior of the case (30) is planar.

10. The rechargeable battery of one of claims 1 to 5, wherein the corner (63) is formed to have an oblique angle at which a front surface (34, 35) and a lateral surface (36, 37) of the case (30) meet, and an inner surface of the support (62) has an arc shape.

11. The rechargeable battery of one of claims 1 to 5, wherein the corner (73) has an oblique angle at which a front surface (34, 35) and a lateral surface (36, 37) of the case (30) meet, and an inner surface of the support (72) has a trigonal prism shape.

12. The rechargeable battery of one of claims 1 to 11, wherein there is a support (38, 62, 72, 82) at each corner (39, 63, 73, 83) of the case (30).
